Europäisches Patentamt

European Patent Office

Office européen des brevets

(19)

(11) Veröffentlichungsnummer: **0 304 569**
**A2**

## (12) EUROPÄISCHE PATENTANMELDUNG

(21) Anmeldenummer: 88109408.0

(22) Anmeldetag: 14.06.88

(51) Int. Cl.⁴: **H04M 11/00**

(30) Priorität: 26.08.87 DE 3728479
21.11.87 DE 3739509

(43) Veröffentlichungstag der Anmeldung:
**01.03.89 Patentblatt 89/09**

(84) Benannte Vertragsstaaten:
**AT BE CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Elsässer, Dieter Grundig E.M.V.**
**El.-Machanische**
**Versuchsanstalt Max Grundig holländ**
**Stiftung&Co KG**
**Kurgartenstrasse 37 D-8510 Fürth/Bay(DE)**
Erfinder: **Hegendörfer, Max Grundig E.M.V.**
**El.-Machanische**
**Versuchsanstalt Max Grundig holländ**
**Stiftung&Co KG**
**Kurgartenstrasse 37 D-8510 Fürth/Bay(DE)**

(54) Kontroll-, Steuerungs- und Kommunikationssystem.

(57)     2.1 Es sind bereits derartige Systeme für Gebäude mit einzelnen räumlich getrennten Wohn- oder Aufenthaltsbereichen bekannt. Hierbei sind in den einzelnen Bereichen bestimmte über einen Datenbus mit einer Zentrale in Verbindung stehende Überwachungs-, Steuerungs- und/oder Kommunikationsmittel installiert. Das neue System soll es ermöglichen, Vorgänge und Zustände in den Wohn- oder Aufenthaltsbereichen oder von darin befindlichen Einrichtungen von einem beliebigen internen oder externen Ort aus zu überwachen and zu steuern. Ferner soll sich das System leichter installieren, ohne Schwierigkeiten an individuelle Bedürfnisse anpassen und jederzeit beliebig erweitern lassen.

2.2 Hierzu ist das Kontroll, Steuerungs- und Kommunikationssystem als modular auf- und ausbaufähiges Baukastensystem konzipiert. Es sind geeignete Kommunikations-Schnittstellen vorgesehen, die den hausinternen Datenbus mit externen Steuer- und/oder Kommunikationsdiensten verbinden. Ferner ist jedem Wohn- oder Aufenthaltsbereich ein Verteiler-Interface mit elektronisch umschaltbaren Ein- bzw. Ausgängen zugeordnet, über das der Datenbus an die Überwachungs- und/oder Steuerungsmitel anschließbar ist. Als Überwachungsmittel sind elektronische und/oder optische Sensoren und als Steuerungsmittel elektronisch steuerbare Schalteinrichtungen vorgesehen. Außerdem sind als Überwachungs-und/oder Kommunikationsmittel interne und/oder externe Video- und/oder Audiogeräte vorgesehen.

2.3 Das Kontroll-, Steuerungs- und Kommunikationssystem ist für den Einsatz in Wohn- und Geschäftshäuser dedacht.

Fig.7

## KONTROLL-, STEUERUNGS- UND KOMMUNIKATIONSSYSTEM

Die Erfindung betrifft ein Kontroll-. Steuerungs- und Kommunikationssystem der im Oberbegriff des Anspruchs 1 angegebenen Art.

Ein derartiges System ist aus der DE-OS 35 24 094 bekannt. Dort wird ein Nachrichtensystem für Wohnhäuser mit einer Türsprechanlage und mit Steuersignalen für eine Türklingel und den Türöffner beschrieben. Als einziger Nachrichtenweg wird die bereits vorhandene Antennenanlage ausgenutzt, deren Antennenkabel in alle Wohnungen führt. Das bekannte Nachtrichtensystem besitzt eine allen Wohnungen gemeinsame Zentrale zur Steuerung bzw. Herstellung der jeweiligen Sprechverbindungen. Über das als einzigen Nachrichtenweg vorgesehene Antennenkabel werden neben den Sprechsignalen noch digitale Steuerbefehle übertragen (Datenbus), die zur Auswahl und Steuerung der jeweils benötigten Sprechverbindung dienen, und die darüberhinaus noch andere elektrische Größen, beispielsweise für eine Ablesung der Heizkosten oder für einen Alarm bei einem Brand in einer Wohnung, beihalten können.

Das bekannte System ist jedoch für umfassende Kontroll-, Steuerungs- und Kommunikationsaufgaben nicht geeignet.

Der Erfindung liegt die Aufgabe zugrunde, ein Kontroll-, Steuerungs- und Kommunikationssystem der im Oberbegriff des Anspruchs 1 angegebenen Art zu schaffen, das es ermöglicht, Vorgänge und Zustände in den Wohn- oder Aufenthaltsbereichen eines Gebäudes oder von darin befindlichen Einrichtungen von einem beliebigen internen oder externen Ort aus zu überwachen und zu steuern. Ferner soll sich das System leicht installieren, ohne Schwierigkeiten an individuelle Bedürfnisse anpassen und jederzeit beliebig erweitern lassen.

Diese Aufgabe wird gemäß der Erfindung durch die im Kennzeichen des Patentanspruchs 1 angegebenen Merkmale gelöst. Vorteilhafte Ausgestaltungen der Erfindung sind in den Unteransprüchen gekennzeichnet.

Bei dem Kontroll-, Steuerungs- und Kommunikationssystem gemäß der Erfindung sind in vorteilhafter Weise geeignete Kommunikations-Schnittstellen vorgesehen, die den hausinternen Datenbus mit dem Postnetz und/oder anderen externen Steuer- und/oder Kommunikationsdiensten verbinden. Ferner ist jedem Wohn- oder Aufenthaltsbereich ein Verteiler-Interface mit elektronisch umschaltbaren Ein- bzw. Ausgängen zugeordnet, über das der Datenbus an die Überwachungs- und/oder Steuerungsmittel anschließbar ist. Hierbei sind als Überwachungsmittel elektronische und optische Sensoren vorgesehen, die bestimmte in einem Raum ablaufende Vorgänge, darin herrschende Zustände oder Zustände von in dem Raum befindlichen Einrichtungen überwachen, und die darüberhinaus entsprechende Daten in Abhängigkeit von erwünschten oder unerwünschten Vorgängen bzw. Zuständen über geeignete Bedien- und Signalverarbeitungsteile aussenden. Als Steuerungsmittel sind gemäß der Erfindung elektronisch steuerbare Schalteinrichtungen vorgesehen, über die nach der Decodierung von empfangenen Daten bestimmte Zustände in einem Raum bzw. von darin befindlichen Einrichtungen elektronisch auslösbar oder beeinflußbar sind. Schließlich verfügt das System gemäß der Erfindung noch über interne und/oder externe Video- und/oder Audiogeräte, über die mit entsprechenden (Fern-) Bedienteilen die in den einzelnen Wohn- oder Aufenthaltsbereichen herrschenden Zustände und/oder ablaufenden Vorgänge selektiv abrufbar und darstellbar sind.

Das Kontroll-, Steuerungs- und Kommunikationssystem gemäß der Erfindung ist bevorzugt als Baukastensystem mit festen Komponenten für die Zentrale, für die Verteiler-Interfaces sowie für die Bedien- und Signalverarbeitungsteile konzipiert und in beliebigen Stufen modular auf- und ausbaufähig.

Durch die modulare Ausbaufähigkeit kann das System sehr leicht an individuelle Bedürfnisse angepaßt werden. Ferner hat ein solches System den großen Vorteil, daß seine Installation ohne weiteres auch von Laien durchführbar ist.

Ausführungsbeispiele der Erfindung sind im folgenden anhand von Zeichnungen näher erläutert. Es zeigen:

Fig. 1 ein Blockschaltbild für ein Modul "Zentrale"

Fig. 2 ein Blockschaltbild für ein Modul "Verteiler-Interface"

Fig. 3 ein Blockschaltbild für ein Modul "Bild-Bedienteil"

Fig. 4 ein Blockschaltbild für ein Modul "Kommunikations-Bedienteil"

Fig. 5 Prinzipschaltbild für ein Kontroll-, Steuerungs-und Kommunikationssystem gemäß der Erfindung in einer ersten Ausbaustufe

Fig. 6 Prinzipschaltbild für ein Kontroll-, Steuerungs-und Kommunikationssystem gemäß der Erfindung in einer zweiten Ausbaustufe

Fig. 7 Prinzipschaltbild für ein Kontroll-, Steuerungs-und Kommunikationssystem gemäß der Erfindung in einer dritten Ausbaustufe

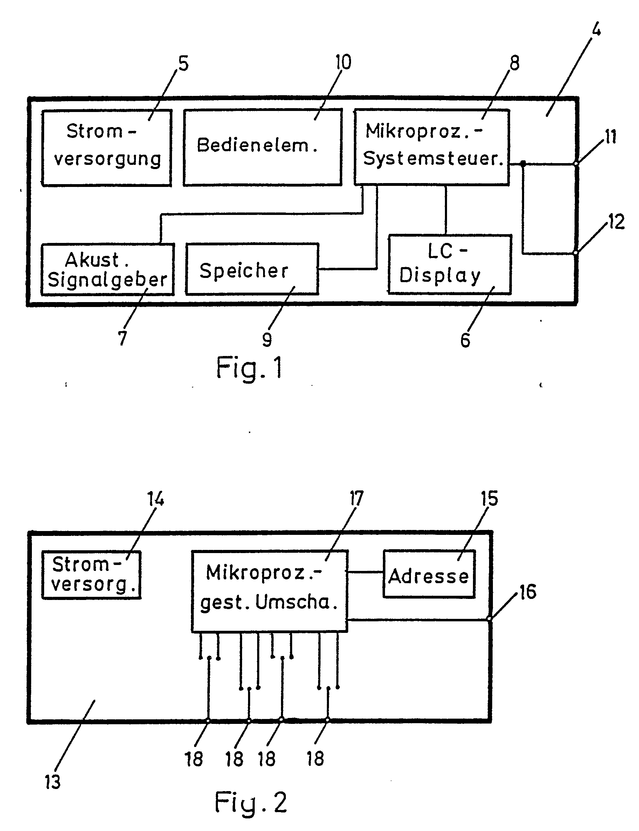

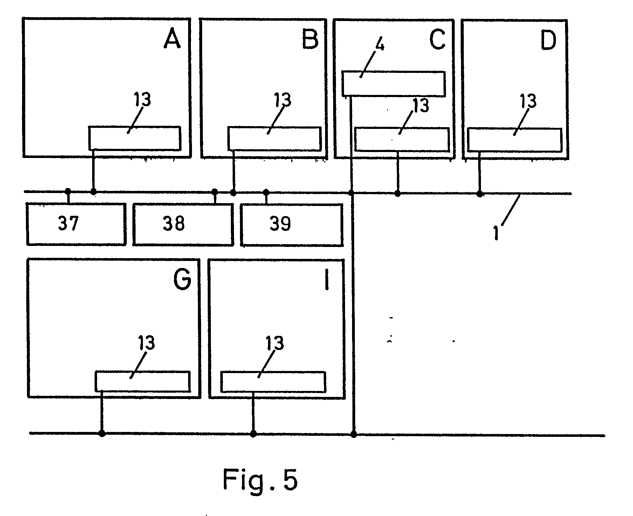

In Fig. 1 ist das Blockschaltbild einer Zentrale 4 dargestellt, wie sie z.B. in einer ersten Ausbaustufe eines Kontroll-, Steuerungs- und Kommunikatiïonsytems gemäß der Erfindung vorzusehen wäre (vgl. hierzu auch Fig. 5). Die Zentrale 4 besteht im wesentlichen aus einer Stromversorgung 5, einem LC-Display 6, einem akustischen Signalgeber 7, einer Mikroprozessor-Systemsteuerung 8, einem nichtflüchtigen Speicher 9 sowie aus geeigneten Bedienelementen 10. Ferner weist die Zentrale 4 je einen Ein- und Ausgang 11, 12 für einen Kontrollbus 1 auf.

Für weitere Ausbaustufen des Systems ist die Zentrale 4 in vorteilhafter Weise durch entsprechende Ein- und Ausgangsanschlüsse für einen Video- und Audiobus 2, 3, durch einen Video-/Audioschalter, ein Mikrofon, einen Audioverstärker sowie durch einen Modulator für die HF-mäßige Einspeisung von Video- und/oder Audioinformation in eine Antennenanlage erweiterbar. Als Videogeräte kommen dann in vorteilhafter Weise alle an der Antennenanlage betriebenen Fernsehgeräte und/oder Videorecorder in Betracht. Bevorzugt sind die betreffenden Geräte mit Videotextdecodern ausgestattet und die zu empfangenden Daten entsprechend codiert. Hierdurch können Kontrollinformationen auch im Klartext dargestellt werden. Als Kontrollinformationen kommen z.B. Meldungen über Feuer, Gas- und Wasseraustritt, Raumtemperatur, Zustände von Türen und Fenstern (offen, geschlossen, versperrt, entriegelt), Zustände von Scheiben (intakt oder zerbrochen), Bewegungen im Raum (z.B. über Bewegungsmelder oder Kameras) sowie Geräusche (z.B. Babysitter) in Frage.

Einen weiteren Baustein für das gemäß der Erfindung modular aufbaubare Kontroll-, Steuerungs- und Kommunikationssystem bildet das Verteiler-Interface 13, dessen Blockschaltung in Fig. 2 dargestellt ist. Es verfügt über eine eigene Stromversorgung 14, einen einstellbaren Adressenspeicher 15, einen Kontrollbus-Anschluß 16 sowie über mikroprozessorgesteuerte Umschalter 17 und über damit verbundene Ein-/Ausgänge 18 für den Anschluß von Sensoren oder Schalteinrichtungen.

Mit Hilfe einer Zentrale 4 gemäß Fig. 1, eines oder mehrerer Verteiler-Interfaces 13 gemäß Fig. 2, sowie einer Kontrollbus-Verbindung zwischen der Zentrale und den einzelnen Verteiler-Interfaces läßt sich entsprechend Fig. 5 bereits ein einfaches Kontroll-, Steuerungs- und Kommunikationssystem aufbauen. Hierbei stellen die mit den Großbuchstaben A, B, C, D, G und I bezeichneten Blöcke die Wohn- und Aufenthaltsbereiche eines Gebäudes dar. Jeder Bereich ist mit einem Verteiler-Interface 13 ausgestattet. Der Kontrollbus 1 verbindet alle Bereiche mit der Zentrale 4, die z.B. im Wohnbereich C angeordnet ist. Das in Fig. 5 dargestellte System verfügt ferner über zusätzliche Kommunikationsschnittstellen 37, 38, 39, die den hausinternen Kontrollbus mit dem Postnetz und/oder anderen externen Steuer- und/oder Kommunikationsdiensten verbinden (z.B. Telefonwählgerät oder Temex-Anschluß).

Mit einem derartigen System können elektrische oder elektronische Einrichtungen (fern-)gesteuert, (fern-)abgefragt und zu automatischen Meldungen stimuliert werden. Die Information wird am LC-Display 6 der Zentrale 4 dargestellt. Eine Fernbedienung aktiviert und manipuliert das System. Mann kann z.B. fünf verschiedene Aktionen unterscheiden:

1. Konfigurieren
2. Zustände abfragen
3. Aktionen auslösen
4. Meldungen automatisch ausgeben
5. Kommunizieren

Nach dem Aktivieren durch die Fernbedienung - am Bedienteil der Zentrale - erscheint am Display 6 ein Hauptmenü zur Auswahl einer der fünf Möglichkeiten. Mit Hilfe von Cursor und Übernahmetaste am Tastenblock 10 der Zentrale wird die Wahl getroffen. Jedes Menü gliedert sich in dem Verwendungszweck entsprechende Untermenüs, die ebenfalls mit den Bedienelementen 10 abgearbeitet werden können. Neben der Menüsteuerung könnte bei einem bevorzugten Konzept z.B. noch die Zuordnung von Namen zu den einzelnen Verteiler-Interfaces und deren Anschlüssen vorgesehen sein. Hierdurch kann in Verbindung mit einer telespielähnlich gestalteten Grafik (Wohnzimmer, Keller, Schlafzimmer usw.) eine dem Benutzer sofort verständliche Meldung am Display ausgegeben werden.

Über die Kommunikations-Schnittstelle mit dem Postnetz ist ferner eine Fernabfrage der Sensoren und/oder eine Fernsteuerung der Schalteinrichtungen mittels Bildschirmtext durchführbar. Durch Generieren oder Aufrufen einer geeigneten Bildschirmtextseite kann z.B. von einem beliebigen Ort X aus der Zustand von Geräten an einem Ort Y (zu überwachendes Gebäude) beeinflußt werden, z.B. die Programmierung eines Videorecorders oder das Ein-/Ausschalten der Heizung. Ebenso ist die Abfrage von bestimmten Zuständen möglich. Bei einer weiteren Ausführungsform ist vorgesehen, die als Bildschirmtext zu generierenden oder zu decodierenden Daten verschlüsselt über das Postnetz zu übertragen.

Am jeweiligen Verteiler-Interface selbst können Sensoren z.B. für folgende Meldungen betrieben werden:
- Feuer
- Gasaustritt
- Wasseraustritt
- Zustand/Fehler am Elektrogerät
- Türe: offen/geschlossen
- Türe: versperrt/entriegelt
- Fenster: offen/geschlossen
- Fensterscheibe: intakt/zerbrochen
- Bewegung im Raum
- Temperatur
- Babysitter

- Notruf

Bei Zustandsmeldungen, die auf eine Gefahr hinweisen, ist es sinnvoll, die Video-und/oder Audiogeräte automatisch zu aktivieren. In vorteilhafter Weise werden dann z.B. kritische Alarmmeldungen wie Feuer, Einbruch usw. unabhängig vom Einschaltzustand eines Fernsehers und dem laufenden Programm sofort am Bildschirm angezeigt. Extern können im Alarmfall vorprogrammierte Telefonnummern, gegebenenfalls nach Prioritäten geordnet, angewählt werden, um einen vorher bestimmten Text zu übermitteln. Auf weniger kritische Meldungen kann z.B. am Bildschirm durch Einblenden eines bestimmten Hinweiszeichens aufmerksam gemacht werden.

Ebenfalls über ein Verteiler-Interface - programmiert als Ausgang - können dezentral verteilt
- akustische Alarmgeber
- optische Alarmgeber
- direkt gesteuerte Schalter
- zeitgesteuerte Schalter
vorgesehen werden. Die installierten Schalter dienen z.B. zur Steuerung der Heizung, der Rolläden oder dergleichen.

Weitere Möglichkeiten ergeben sich durch den Einsatz eines Telefonwählgerätes, das über die Kommunikations-Schnittstelle zum Postnetz anschließbar ist. Hiermit können eines oder mehrere vorprogrammierte Telefonnummern - Staffelung nach Priorität - im Alarmfall angewählt werden, um einen vorher bestimmten Text zu übermitteln. Ferner wäre es denkbar, daß zwei mit dem gleichen System ausgestattete Gebäude gegenseitig Information austauschen und darstellen.

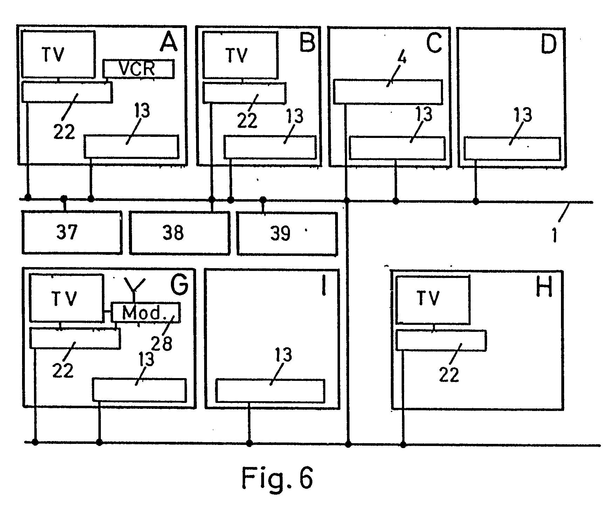

Ein Kontroll-, Steuerungs- und Kommunikationssystem gemäß Fig. 5 kann nun in einer weiteren Ausbaustufe noch durch Video- und/oder Audiogeräte erweitert werden (vgl. Fig. 6), wodurch ein noch wesentlich komfortableres System entsteht.

Hierzu sind gemäß der Efindung zwei weitere Bausteine oder Module vorgesehen, die ohne großen zusätzlichen Installationsaufwand den Anschluß beliebiger Fernsehgeräte, Monitore, Videorecorder, Kameras und Sprechanlagen an das bereits vorhandene Kontroll-, Steuerungs- und Kommunikationssystem ermöglichen. Lediglich der bisher nur aus einem Kontrollbus bestehende Datenbus ist nrch um einen Video- und/oder Audiobus zu erweitern.

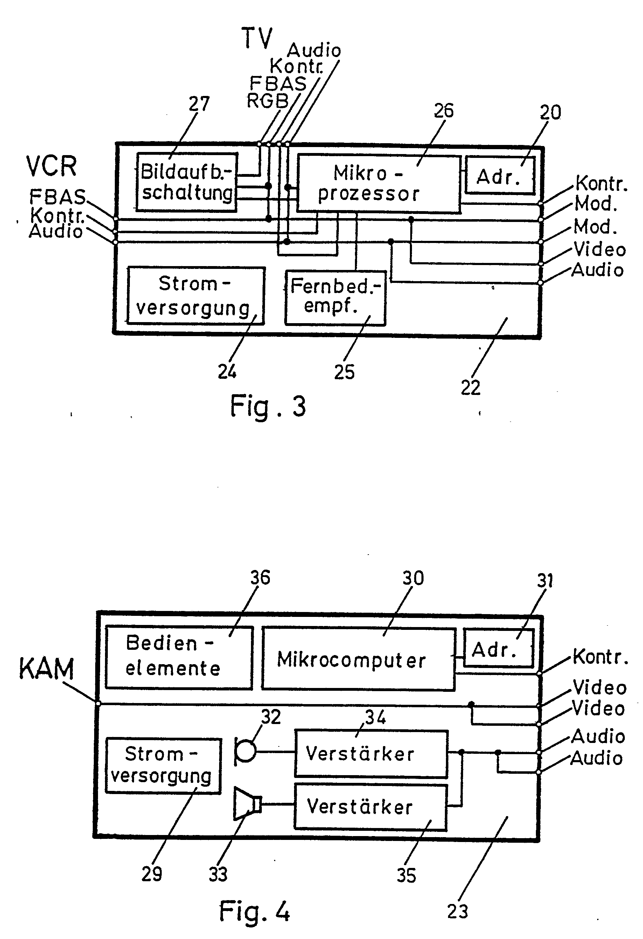

Bei dem einen Baustein, der zur Fernbedienung und Bildaufbereitung dient und der in Fig. 3 dargestellt ist, handelt es sich um ein geeignetes Bild-Bedienteil 22. Es enthält eine eigene Stromversorgung 24, einen Fernbedienempfänger 25, einen Mikroprozessor 26, eine Bildaufbereitungsschaltung 27 sowie einen einstellbaren Adressenspeicher 20. Ferner weist das betreffende Bild-Bedienteil Anschlüsse für den Kontroll-, Video- und Audiobus 1, 2, 3, für die zu steuernden Video- und/oder Audiogeräte, TV, VCR sowie für einen Video- und/oder Audiomodulator 28 auf, über den die Bild- und/oder Toninformation HF-mäßig aufbereitet werden kann.

Als zweiter Baustein, der zur Übertragung von Bild- und Tonsignalen dient und der in Fig. 4 dargestellt ist, ist ein sogenanntes Kommunikations-Bedienteil 23 vorgesehen. Es enthält eine eigene Stromversorgung 29, einen Mikroprozessor 30 für den Verbindungsaufbau, einen einstellbaren Adressenspeicher 31, ein Mikrofon 32, einen Lautsprecher 33 sowie geeignete Verstärker 34, 35 und Bedienelemente 36. Ferner weist das betreffende Kommunikations-Bedienteil Anschlüsse für den Kontroll-, Video- und Audiobus 1, 2, 3, sowie für zur Überwachung und Kommunikation dienende Videogeräte, insbesondere Kameras, auf.

Über das Bild-Bedienteil 22 können Bild und Ton je nach Ausstattung des Fernsehgerätes oder des Monitors über RGB, FBAS oder HF übertragen bzw. dort eingespeist werden. Videorecorder oder andere Peripheriegeräte werden durch das Bedienteil durchgeschleift. Über das Kommunikations-Bedienteil 23 ist es zusätzlich auch möglich, Selektiv- oder Gruppenverbindungen mit Ton und/oder Bild aufzubauen. So besteht z.B. die Möglichkeit, mehrere Videokameras (Tür/Tor-Anlage, Kinderzimmer, usw.) zu installieren und das Bild und/oder den Ton an jeder Station zu empfangen. Die Konfiguration kann so gewählt werden, daß an dem Bildschirm, der sich im Blickfeld der im Haushalt am häufigsten anwesenden Person befindet, ständig das Kinderzimmer dargestellt wird. Bei Betätigung der Hausklingel würde der Schirm dann automatisch auf das Bild der Torkamera umschalten. Über die Wechselsprechverbindung 32, 34, 3, 35 33 kann anschließend sowohl mit der Person am Tor, als auch mit einer Person im Haus, die z.B. herbeigerufen werden soll, gesprochen werden.

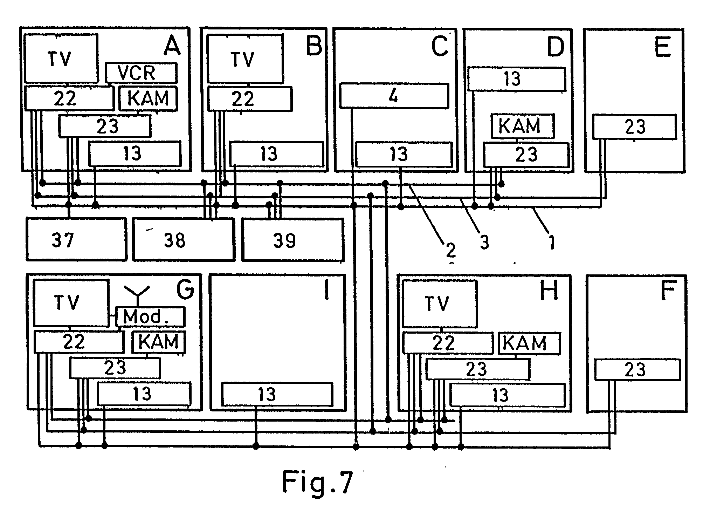

Ein Ausführungsbeispiel für ein Kontroll-, Steuerungs-und Kommunikationssystem in einer fortgeschrittenen Ausbaustufe zeigt Fig. 7. In der betrffenden Figur sind neun Wohn-oder Aufenthaltsbereiche A bis I eines Gebäudes dargestellt, in denen sich die verschiedensten Möglichkeiten der Kontrolle, der Steuerung und der Kommunikation bieten. So ist im Gebäudebereich I z.B. keine aktive Kontrolle der anderen Gebäudebereiche und keine Kommunikation zu den anderen Gebäudebereichen möglich. Der Bereich I kann vielmehr nur von anderen Bereichen aus überwacht und gesteuert werden. Die Bereiche E und F dagegen erlauben im wesentlichen eine Sprechkommunikation mit anderen Gebäudebereichen (D, G und H). Die Bereiche A und G bieten schließlich eine Komplettinstallation, was die Kontrolle und Steuerung elektrischer bzw. elektronischer Einrichtungen sowie die Kommunikation mit Bild und Ton anbelangt. Der Unterschied dieser beiden Kompletteinrichtungen besteht darin, daß im Bereich A die Kommunikation mit Bild und Ton durch RGB-bzw. FBAS-Einspeisung erfolgt, während dies im Bereich G durch HF-Einspeisung geschieht.

Um das System netzunabhängig zu machen, ist bei allen Stromversorgungen 5, 14, 24 und 29 auch Akkubetrieb vorgesehen. Diverse akustische und optische Alarmgeber in Verbindung mit dem LC-Display der Zentrale geben auch bei Netzausfall eindeutig Auskunft über Art und Ort einer eingehenden Meldungen.

**Ansprüche**

1. Kontroll-, Steuerungs- und Kommunikationssystem für Gebäude mit einzelnen räumlich getrennten Wohn- oder Aufenthaltsbereichen, in denen jeweils bestimmte über einen Datenbus mit einer Zentrale in Verbindung stehende Überwachungs-, Steuerungs- und/oder Kommunikationsmittel installiert sind, **dadurch gekennzeichnet**, daß geeignete Kommunikations-Schnittstellen (37, 38, 39) vorgesehen sind, die den hausinternen Datenbus (1, 2, 3) mit dem Postnetz und/oder anderen externen Steuer- und/oder Kommunikationsdiensten verbinden, daß jedem Wohn- oder Aufenthaltsbereich (A-I) ein Verteiler-Interface (13) mit elektronisch umschaltbaren Ein- bzw. Ausgängen (18) zugeordnet ist, über das der Datenbus an die Überwachungs- und/oder Steuerungsmittel anschließbar ist, daß als Überwachungsmittel elektronisch und/oder optische Sensoren und als Steuerungsmittel elektronisch steuerbare Schalteinrichtungen vorgesehen sind, die zum einen bestimmte in einem Raum ablaufende Vorgänge, darin herrschende Zustände oder Zustände von in dem Raum befindlichen Einrichtungen überwachen und entsprechende Daten in Abhängigkeit von erwünschten oder unerwünschten Vorgängen bzw. Zuständen über geeignete Bedien- und Signalverarbeitungsteile (22, 23) aussenden, und über die zum anderen nach der Decodierung von empfangenen Daten bestimmte Zustände in einem Raum bzw. von darin befindlichen Einrichtungen elektronisch auslösbar oder beeinflußbar sind, und daß ferner als Überwachungs-und/oder Kommunikationsmittel interne und/oder externe Video- und/oder Audiogeräte (TV, VCR, KAM) vorgesehen sind, über die mit den Bedienteilen (22, 23) die in den einzelnen Wohn- oder Aufenthaltsbereichen (A-I) herrschenden Zustände und/oder ablaufenden Vorgängen selektiv abrufbar und darstellbar sind.

2. Kontroll-. Steuerungs- und Kommunikationssystem nach Anpruch 1, **dadurch gekennzeichnet**, daß das Kontroll-, Steuerungs- und Kommunikationssystem als Baukastensystem mit festen Komponenten für die Zentrale (4), für die Verteiler-Interfaces (13) sowie für die Bedien- und Signalverarbeitungteile (22, 23) konzipiert ist und in beliebigen Stufen modular auf- und ausbaufähig ist.

3. Kontroll-, Steuerungs- und Kommunikationssystem nach Ansruch 1 oder 2, **dadurch gekennzeichnet**, daß die Video- und/oder Audiogeräte (TV, VCR, KAM) über geeignete Kommunikations-Schnittstellen mit dem Datenbus (1, 2, 3) verbindbar sind.

4. Kontroll-, Steuerungs- und Kommunikationssystem nach Ansruch 1, 2 oder 3, **dadurch gekennzeichnet**, daß als Datenbus je nach Ausbaustufe entweder ein reiner Kontrollbus (1) zum Steuern und Abfragen von elektrischen oder elektronischen Einrichtungen sowie zum Stimulieren von automatischen Meldungen, oder ein kombinierter Kontroll-, Video-und/oder Audiobus (1, 2, 3) zur Darstellung des Kontroll-, Steuerungs- und Kommunikationssystems sowie zur zusätzlichen Übertragung von Bild- und Tonsignalen vorgesehen ist.

5. Kontroll-, Steuerungs- und Kommunikationssystem nach Ansruch 2 oder 4, **dadurch gekennzeichnet**, daß die in einer ersten Ausbaustufe vorzusehende Zentrale (4) eine Stromversorgung (5), ein LC-Display (6), einen akustischen Signalgeber (7), eine Mikroprozessor-Systemsteuerung (8), einen nichtflüchtigen Speicher (9) sowie geeignete Bedienelemente (10) enthält, und daß die Zentrale ferner je einen Ein- und Ausgang (11, 12) für den Kontrollbus (1) aufweist.

6. Kontroll-, Steuerungs- und Kommunikationssystem nach Anspruch 5, **dadurch gekennzeichnet**, daß die Zentrale (4) durch entsprechende Ein- und Ausgangsanschlüsse für den Video-und/oder Audiobus (2, 3), durch einen Video-/Audioschalter, ein Mikrofon, einen Audio-Verstärker sowie durch einen Modulator für die HF-mäßige Einspeisung von Video- und/oder Audiosignalen in eine Antennenanlage erweiterbar ist.

7. Kontroll-, Steuerungs- und Kommunikationssystem nach einem oder mehreren Ansprüche 1 bis 6, **dadurch gekennzeichnet**, daß die je nach Ausbaustufe in den einzelnen Wohn- oder Aufenthaltsbereichen (A-I) angeordneten Verteiler-Interfaces (13) jeweils über eine Stromversorgung (14), einen einstellbaren Adressenspeicher (15), einen Kontrollbus-Anschluß (16) sowie über mikroprozessorgesteuerte Umschalter (17) und über damit verbundene Ein-/Ausgänge (18) für den Anschluß von Sensoren oder Schalteinrichtungen verfügen.

8. Kontroll-, Steuerungs- und Kommunikationssystem nach einem oder mehreren der Ansprüche 1 bis 7, **dadurch gekennzeichnet**, daß als Videogeräte an einer Antennenanlage betriebene Fernsehgeräte (TV) und/oder Videorecorder (VCR) verwendet werden, und daß ein HF-Modulator vorgesehen ist, der die von den Überwachungsmitteln kommenden Daten hochfrequenzmäßig für einen noch nicht belegten Fernsehkanal aufbereitet und in die Antennenanlage einspeist.

9. Kontroll-, Steuerungs- und Kommunikationssystem nach Anspruch 8, **dadurch gekennzeichnet,** daß die Fernsehgeräte (TV) und/oder Videorecorder (VCR) mit Videotextdecodern ausgestattet sind, über die die empfangenen Daten für eine alphanumerische Anzeige auswertbar sind.

10. Kontroll-, Steuerungs- und Kommunikationssystem nach einem oder mehreren Ansprüche 1 bis 9, **dadurch gekennzeichnet,** daß beim Einsatz von Video- und/oder Audiogeräten (TV, VCR, KAM) als Überwachungs- und/oder Kommunikationsmittel geeignete Bild-Bedienteile (22) zur Fernbedienung und Bildaufbereitung und geeignete Kommunikations-Bedienteile (23) zur Übertragung von Bild- und Tonsignalen vorgesehen sind.

11. Kontroll-, Steuerungs- und Kommunikationssystem nach Anspruch 10, **dadurch gekennzeichnet,** daß jedes Bild-Bedienteil (22) eine Stomversorgung (24), einen Fernbedienempfänger (25), einen Mikroprozessor (26), eine Bildaufbereitungsschaltung (27) sowie einen einstellbaren Adressenspeicher (20) enthält, und daß jedes Bild-Bedienteil ferner Anschlüsse für den Kontroll-, Video- und Audiobus (1, 2, 3), für die zu steuernden Video- und Audiogeräte (TV, VCR) sowie für einen Video-und/oder Audiomodulator (28) aufweist, über den die Bild-und/oder Toninformation HF-mäßig in eine Antennenanlage einspeisbar ist.

12. Kontroll-, Steuerungs- und Kommunikationssystem nach Anspruch 10, **dadurch gekennzeichnet,** daß jedes Kommunikations-Bedienteil (23) eine Stromversorgung (29), einen Mikrocomputer (30) für den Verbindungsaufbau, einen einstellbaren Adressenspeicher (31), ein Mikrofon (32), einen Lautsprecher (33) sowie geeignete Verstärker (34, 35) und Bedienelemente (36) enthält, und daß jedes Kommunikations-Bedienteil ferner Anschlüsse für den Kontroll-, Video- und Audiobus (1, 2, 3) sowie für zur Überwachung und Kommunikation dienende Videogeräte, insbesondere Kameras (KAM), aufweist.

13. Kontroll-, Steuerungs- und Kommunikationssystem nach einen oder mehreren der Ansprüche 1 bis 12, **dadurchgekennzeichnet,** daß über die Kommunikations-Schnittstelle mit dem Postnetz eine Fernsteuerung der Schalteinrichtungen und/oder eine Fernabfrage der Sensoren mittels Bildschirmtext durchführbar ist.

14. Kontroll-, Steuerungs- und Kommunikationssystem nach Anspruch 13, **dadurch gekennzeichnet,** daß die als Bildschirmtext zu generierenden oder zu decodierenden Daten verschlüsselt über das Postnetz übertragbar sind.

15. Kontroll-, Steuerungs- und Kommunikationssystem nach einem oder mehreren der Anprüche 1 bis 14, **dadurch gekennzeichnet,** daß die einzelnen Wohn- oder Aufenthaltsbereiche (A-I) sowie die darin befindlichen Einrichtungen durch eine Bildschirmgraphik darstellbar sind, und daß durch die Darstellungsart von graphischen Symbolen bestimmte Zustände der einzelnen Bereiche oder Einrichtungen anzeigbar sind, wobei den graphischen Symbolen bestimmte Sensoren oder Schalteinrichtungen individuell über eine Bedieneinheit zugeordnet werden können.

16. Kontroll-, Steuerungs- und Kommunikationssystem nach einem oder mehreren der Ansprüche 1 bis 15, **dadurch gekennzeichnet,** daß die Video- und/oder Audiogeräte (TV, VCR, KAM) bei Zustandsmeldungen, die auf eine Gefahr hinweisen, automatisch aktivierbar sind.

17. Kontroll-, Steuerungs- und Kommunikationssystem nach einem oder mehreren der Ansprüche 1 bis 16, **dadurch gekennzeichnet,** daß sowohl netzabhängiger als auch netzunabhängiger Betrieb möglich ist, und daß die Umschaltung bei Netzausfall automatisch erfolgt.

Fig. 1

Fig. 2

EP 0 304 569 A2

Fig. 3

Fig. 4

Fig. 5

EP 0 304 569 A2

Fig. 6

EP 0 304 569 A2

Fig.7

EP 0 304 569 A2